# EUROPEAN PATENT APPLICATION

(11) **EP 1 762 438 A1**
(43) Date of publication of application: **14.03.2007**
(21) Application number: 05019533.8
(22) Date of filing: 08.09.2005
(51) Int. Cl.: B60R 19/34

(54) **Impact absorbing device for a motor vehicle**

(71) Applicant: Wagon Automotive GmbH, 63857 Waldaschaff (DE)
(72) Inventor: Schaal, Dietmar, 63768 Hösbach (DE); Diehm, Jürgen, 97877 Wertheim (DE); Honrich, Stefan, 91301 Forchheim (DE); Keller, Roland, 97904 Dorfprozelten (DE); Behre, Rüdiger, 63322 Rödermark (DE)
(74) Representative: Gesthuysen, von Rohr & Eggert

(57) **Abstract**

The invention relates to an impact absorbing device for a motor vehicle, which absorbs energy by plastic deformation on an impact, comprising a tubular hollow body (1) of metal which has a polygonal cross-section, in particular a rectangular or square cross-section, wherein the hollow body (1) defines a longitudinal direction of the device. In this device the hollow body (1) is open at both ends, the hollow body (1) is made from a flat metal blank (2), the flat metal blank (2) is formed to the polygonal hollow body (1) by angle-bending at longitudinal edges (3) running in the longitudinal direction between each two adjacent longitudinal sides (4), and is closed in the longitudinal direction by a longitudinal welding seam (5), by a spot welding seam, and/or by mechanical joints.

## Description

The invention relates to an impact absorbing device for a motor vehicle, which absorbs energy by plastic deformation on an impact, this device comprising the features of the generic part of claim 1. Further, this invention relates to a method for manufacturing such an impact absorbing device with the features of the generic part of claim 9.

To protect occupants of a motor vehicle it is well known to use impact absorbing devices or shock absorbers at different locations of the vehicle body, those shock absorbers absorbing energy by plastic deformation on an impact. A suitable location for such a shock absorber is the location between the bumper cross-beam and the longitudinal supports which are connected to the passenger compartment. Those impact absorbing devices are also named deformation elements or defo-elements. Other locations for those impact absorbing devices can be found at the dashboard, e.g. as defo-elements for steering columns.

An impact absorbing device should combine a perfect deformation with cost-effective manufacturing. The prior art forming the starting point of the invention (EP 1 114 753 B1) discusses many examples of the prior art for bumper crossbeams and other locations in the vehicle body. Express reference is made to this prior art document.

The prior art impact absorbing device of above mentioned prior art document itself is of a pot-shaped construction. The end of the hollow body facing away from its closed base is bent outwards so that the edge region which is formed like this can either itself be used as a flange or can be attached to a flange plate. The hollow body with this flange is made from steel or aluminum sheet material. Manufacturing of this impact absorbing device is done by deep-drawing the steel sheet or aluminum sheet. Following formation of the hollow body with the flange in a first manufacturing step the final form including predetermined bulges in the side walls of the hollow body is achieved by a further forming step, preferably internal high-pressure forming.

Whereas the integrated flange at the open side of the hollow body is an interesting feature, the manufacturing method is comparably costly and has a high rate of failure.

From a different prior art (US 4,312,430 A) manufacturing of a shock absorber disposed between a steering wheel and a steering post is known. The shock absorber comprises upper and lower holding rings to be coupled to the steering wheel and the steering post, respectively, and a plurality of supporting elements connecting the upper and lower holding rings. All those parts are formed into one substantially cylindrical unit. The complete shock absorber is made from one sheet of metal, in particular steel with a thickness of between 1,6 mm and 2,6 mm. The metal blank is cut or stamped to get the final form of the hollow body. The stamped metal blank is bent into a cylinder and then the ends of the holding rings are welded to close this hollow body. The manufacturing steps are expensive here as well, in particular because the welding of the holding rings needs high precision.

The object of the present invention is to provide an impact absorbing device of the type mentioned above that can be produced in a simple, inexpensive manner.

Above mentioned object is achieved for an impact absorbing device by the features of claim 1. The corresponding manufacturing method is defined by the features of claim 9.

Basically the invention defines that a-polygonal, in particular rectangular or square cross-section of the tubular hollow body is a good basis to achieve simple and inexpensive manufacturing. It is possible by angle-bending of the metal blank along the longitudinal edges running in the longitudinal direction between each two adjacent longitudinal sides to get the intended form of the hollow body. This is much simpler than bending the hollow body into an exactly circular form.

Simultaneously flange-like areas can be formed simply by providing extensions beyond the specific end of longitudinal sides of the metal blank. Those extensions may be angle-bent laterally outwardly relative to the longitudinal direction of the hollow body thus forming the flanges useful for attaching the impact absorbing device to another vehicle component. Those flange-like extensions are integrally formed on the metal blank and need no separate connecting step.

As far as the manufacturing method is concerned this is particularly advantageous if high strength steel sheet material of a thickness between about 1,4 mm and about 2,0 mm is used. Zinc coated steel sheets provide a perfect basis for this kind of impact absorbing device. Already during the cutting or stamping step necessary ribs and perforationss may be formed simultaneously. This basic and comprehensive method step is followed by only two further steps, namely angle-bending of the metal blank to form the hollow body and closing of the hollow body by a longitudinal welding seam, a spot welding seam and/or mechanical joints.

Whereas a steel sheet material, in particular from high strength steel is preferred under normal circumstances, other metal sheet material, in particular aluminum sheet material of appropriate thickness, may be used as well.

Angle-bending of the metal blank to form the polygonal hollow body allows a specific form of the hollow body, namely a form, where the hollow body is tapering from one end towards the other end. This is achieved by the features of claim 2 as far as the product is concerned and by the features of claim 10 as far as the manufacturing method is concerned.

Further modifications of the product and the method may be obtained from the further dependent claims.

Further details and advantages of the invention can be obtained from the exemplary embodiments explained with reference to the figures.
- Fig. 1: is a top plan view on a flat metal blank for an impact absorbing device according to the invention,
- Fig. 2: is a perspective view from behind of an impact absorbing device made from a metal blank according to Fig. 1,
- Fig. 3: is a metal blank for a further embodiment of the invention.

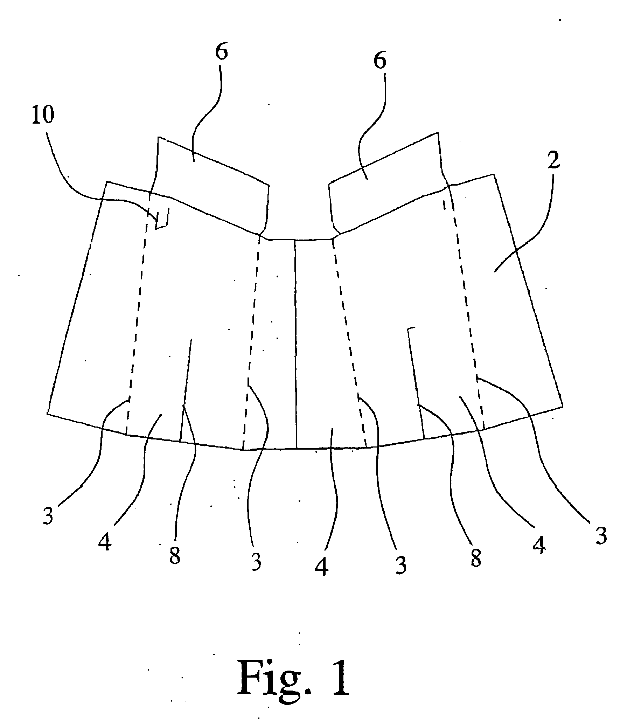

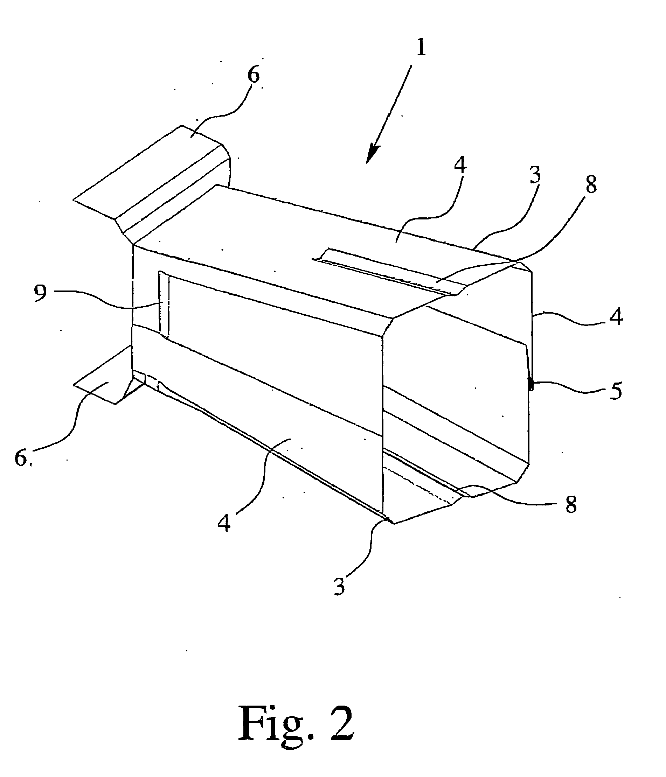

Fig. 1 and 2 together disclose that the product is an impact absorbing device for a motor vehicle which absorbs energy by plastic deformation on an impact. Provided is a tubular hollow body 1 having a polygonal cross-section, in the present embodiment a rectangular or square cross-section. Other polygonal cross-sections like hexagonal or octagonal cross-sections are probably applicable, too.

The hollow body 1 is, as can be seen in Fig. 2, open at both ends. This is in contrast to the hollow body in the prior art forming the starting point of the invention which is closed at one end due to the deep drawing manufacturing method.

The open structure of the hollow body 1 allows that the hollow body 1 be made from a flat metal blank 2 (Fig. 1). The metal blank 2 is formed to the polygonal hollow body 1 by angle-bending at longitudinal edges 3 running in the longitudinal direction between each two adjacent longitudinal sides 4. From Fig. 2 it can be obtained that finally the metal blank 2 is closed in the longitudinal direction by a longitudinal welding seam 5, by a spot welding seam, and/or by mechanical joints. Mechanical joints may be e.g. press joint connections or rivet connections.

In the present embodiment the metal blank 2 is cut, in particular stamped from a high-strength steel sheet and/or a zinc coated steel sheet, preferably a high-strength zinc coated steel sheet. However, other metal sheet material may be used if its final strength is appropriate for the specific location in the vehicle body. In particular aluminum sheet material is an appropriate material, too. For front or rear impact absorption between longitudinal beams and bumper crossbeams, however, steel sheet material will be preferred.

Fig. 1 shows the longitudinal edges 3 between each two adjacent longitudinal sides 4 by dashed lines. Fig. 1 and Fig. 2 together show that the widths of at least two opposite longitudinal sides 4 of the hollow body 1 are smaller at one end than at the other end so that the hollow body 1 is tapering towards the one end. The hollow body 1 in Fig. 2 has a kind of conical shape in one dimension. This is particularly effective for the positioning of this embodiment of the impact absorbing device between longitudinal beam and bumper cross-beam. Different forms may be preferable for different locations and loads.

The embodiment shown in Fig. 1 and 2 is particularly interesting, because the metal blank 2 forming the hollow body I has at least at one end a flange-like extension 6 extending beyond this end of the longitudinal side 4 of the metal blank 2. Fig. 1 shows this extension 6 just in the plane of the metal blank 2. Fig. 2 shows what happens to the extensions 6 in the final hollow body 1. They are angle-bent laterally outwardly relative to the longitudinal direction of the hollow body 1 and serve as means for attaching the hollow body 1 to another vehicle body component, here to the bumper cross-beam which is not indicated in Fig. 2. However, it is easily understandable how the extensions 6 in Fig 2 extend above and below the bumper cross-beam and are fixedly attached to the bumper cross-beam by mechanical joints and/or welding.

In addition to the formation of the extensions 6 on the flat metal blank 2 Fig. 2 shows that it is possible that the metal blank 2 is provided with longitudinal reinforcement ribs 8 and/or with transverse ribs 9 for improved buckling properties and/or with perforations 10 for attachment purposes or the like. Fig. 1 shows in dashed lines the position of the longitudinal edges 3 between each two adjacent longitudinal sides 4 which may be defined by ribs as well.

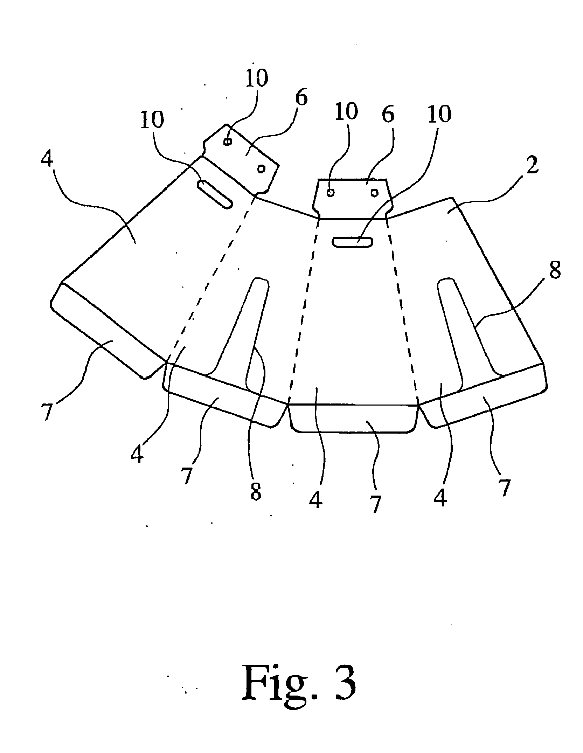

Fig. 3 shows a different embodiment of a metal blank 2. Here extensions 6, 7 are provided at both ends of the metal blank 2 that later forms the hollow body 1. One set of extensions 6 is provided with additional-perforations 10 for mechanical connection to a further vehicle body component. The other extensions 7 together form a kind of mounting plate extending laterally outwardly from the other end of the hollow body 1. This mounting plate formed by the four lateral extensions 7 may serve as a means for attachment to a body component at this end.

Instead of a mounting plate 7 formed by the extensions 7 of the metal blank 2 a separate mounting plate may be provided at this end of the hollow body 1 and may be fixedly connected to the hollow body 1 in particular by welding.

If the metal blank 2 is made from a steel sheet material this should be high-strength steel sheet material that has been hardened and tempered in the usual way. Typical thicknesses lie between 1,4 mm and 2,0 mm. Zinc coated steel sheet material is rather corrosion resistant and is a good choice for many applications in the vehicle body structure.

### The manufacturing method has the following method steps:

From a flat metal sheet, in particular a flat steel sheet, preferably a steel sheet made from high-strength steel and/or zinc coated steel, a metal blank is cut, in particular stamped, forming side by side a number of rectangular quadrilateral longitudinal sides.

The metal blank 2 is angle-bent at longitudinal edges 3 between each two adjacent longitudinal sides 4 to form a tubular hollow body 1 and is closed in the longitudinal direction by a longitudinal welding seam 5, by a spot welding seam and/or mechanical joints.

In a preferred embodiment of the method it is provided that the widths of at least two opposite longitudinal sides 4 of the flat metal blank 2 are smaller at one end than at the other opposite end, so that following the bending and closing of the hollow body 1 the hollow body 1 is tapering towards the one end.

In a further preferred embodiment it is provided that the metal blank 2 is cut or stamped so that afterwards at at least one end a flange-like extension 6 extending beyond this end of the longitudinal side 4 of the metal blank 2 is formed, wherein this extension is angle-bent laterally outwardly relative to the longitudinal direction and serves as a means for attaching the impact absorbing device to another vehicle component.

Finally it is probably interesting that the metal blank 2 in the course of the cutting and/or stamping step is provided with longitudinal reinforcement ribs 8 and/or with transversal ribs 9 and/or with perforations 10.

## Claims

1. Impact absorbing device for a motor vehicle,
which absorbs energy by plastic deformation on an impact,
comprising a tubular hollow body (1) of metal which has a polygonal cross-section, in particular a rectangular or square cross-section,
wherein the hollow body (1) defines a longitudinal direction of the device,
**characterized in that**
the hollow body (1) is open at both ends,
the hollow body (1) is made from a flat metal blank (2), the flat metal blank (2) is formed to the polygonal hollow body (1) by angle-bending at longitudinal edges (3) running in the longitudinal direction between each two adjacent longitudinal sides (4), and is closed in the longitudinal direction by a longitudinal welding seam (5), by a spot welding seam, and/or by mechanical joints.

2. Impact absorbing device according to claim 1, **characterized in that**
the widths of at least two opposite longitudinal sides (4) of the hollow body (1) are smaller at one end than at the other opposite end so that the hollow body (1) is tapering towards the one end.

3. Impact absorbing device according to any one of the preceding claims,
**characterized in that**
the metal blank (2) at least at one end comprises a flange-like extension (6) extending beyond this end of the longitudinal side (4) of the metal blank (2), and this extension (6) is angle-bent laterally outwardly relative to the longitudinal direction of the hollow body (1) and serves as a means for attaching the impact absorbing device to another vehicle body component,
wherein, preferably, the metal blank (2) has an extension (6) on two opposite longitudinal sides (4).

4. Impact absorbing device according any one of the preceding claims,
**characterized in that**
the metal blank (2) is provided at one end, in particular at the end opposite to the end with the extension (6), with at least one metal mounting plate (7).

5. Impact absorbing device according any one of the preceding claims,
**characterized in that**
the metal blank (2) is provided with longitudinal reinforcement ribs (8) and/or with transverse ribs (9) for improved buckling properties and/or with perforations (10) for attachment purposes or the like.

6. Impact absorbing device according any one of the preceding claims,
**characterized in that**
the metal blank (2) is a steel blank,
wherein, preferably, the steel blank (2) is made from a high-strength steel sheet and/or from a zinc coated steel sheet and/or the steel sheet of the steel blank (2) has a thickness of between about 1,4 mm and about 2,0 mm.

7. Method for manufacturing an impact absorbing device for motor a vehicle, which absorbs energy by plastic deformation on an impact,
**characterized by** the following features:
a) From a flat metal sheet, in particular a flat steel sheet, preferably a steel sheet made from high-strength steel and/or zinc coated steel, a metal blank is cut, in particular stamped, forming side by side a number of rectangular quadrilateral longitudinal sides.
b) The metal blank (2) is angle-bent at longitudinal edges (3) between each two adjacent longitudinal sides (4) to form a tubular hollow body (1) and is closed in the longitudinal direction by a longitudinal welding seam (5), by a spot welding seam and/or by mechanical joints.

8. Method according to claim 7, **characterized in that**
the widths of at least two opposite longitudinal sides (4) of the flat metal blank (2) are smaller at one end than at the other opposite end, so that following the bending and closing of the hollow body (1) the hollow body (1) is tapering towards the one end.

9. Method according to any one of the preceding method-claims, **characterized in that**
the metal blank (2) is cut or stamped so that afterwards at at least one end a flange-like extension (6) extending beyond this end of the longitudinal side (4) of the metal blank (2) is formed, wherein this extension (6) is angle-bent laterally outwardly relative to the longitudinal direction and serves as a means for attaching the impact absorbing device to another vehicle component.

10. Method according to any one of the preceding method-claims, **characterized in that**
the metal blank (2) in the course of the cutting and/or stamping step is provided with longitudinal reinforcement ribs (8) and/or with transversal ribs (9) and/or with perforations (10).
